# FASCICULE DE BREVET EUROPEEN

(11) **EP 2 981 426 B1**
(45) Date de publication et mention de la délivrance du brevet: **30.05.2018**
(21) Numéro de dépôt: 14720995.1
(22) Date de dépôt: 03.04.2014
(51) Int. Cl.: F16H 61/431, F16H 61/472

(54) **DISPOSITIF DE TRANSMISSION HYDRAULIQUE.**
HYDRAULIKGETRIEBEVORRICHTUNG
HYDRAULIC TRANSMISSION DEVICE

(30) Priorité: 04.04.2013 FR 1353043
(43) Date de publication de la demande: 10.02.2016
(73) Titulaire: Poclain Hydraulics Industrie, 60410 Verberie (FR)
(72) Inventeur: PRIGENT, André, 60410 Saintines (FR); HOUILLON, Pierre-Louis, 60200 Compiegne (FR); LAMBEY, Julien, 60200 Compiegne (FR)
(74) Mandataire: Duflos, Bertrand Guillaume
(86) Numéro de dépôt international: PCT/FR2014/050809
(87) Numéro de publication internationale: WO 2014/162103

(56) Documents cités:
- FR-A1- 2 504 987
- FR-A1- 2 958 886
- US-A- 3 049 884
- US-A1- 2007 101 709

## Description

L'invention concerne un dispositif de transmission hydraulique, du type comprenant une pompe à débit variable, au moins un moteur hydraulique alimenté par la pompe, et une unité de commande ; et un procédé de commande d'un tel dispositif. Dans le dispositif de transmission hydraulique, le ou les moteurs sont alimentés par la pompe de telle sorte que le débit de fluide traversant le(s) moteur(s) est sensiblement égal au débit de la pompe.

Un tel dispositif peut généralement être activé ou désactivé, selon que l'on veut bénéficier ou non du couple (moteur ou de freinage) qu'il est susceptible d'appliquer à l'organe de sortie du ou des moteurs (voir FR 2 958 886 A). De manière connue, pour activer et désactiver un tel dispositif, on prévoit dans le circuit hydraulique reliant la pompe au moteur une valve d'activation ayant au moins deux positions : En position d'activation, les orifices principaux du moteur sont reliés aux orifices principaux de la pompe, ce qui permet que le fluide sous pression refoulé par la pompe puisse actionner le moteur. En position de désactivation, dite aussi position de bipasse, au contraire les orifices principaux du moteur sont reliés l'un à l'autre (et en général également à une source de pression faible ou nulle). De la sorte, les pressions de fluide à ces deux orifices sont égales, et le moteur ne produit aucun couple sur son organe de sortie.

L'inconvénient d'un tel agencement est que chaque passage du dispositif de l'état activé à l'état désactivé ou inversement, nécessite un déplacement du tiroir de la valve d'activation. Outre le fait que ce basculement n'est pas très rapide, il entraîne en outre une usure de la valve, génère des pics de pression nocifs dans le circuit hydraulique, et donc engendre un coût de maintenance.

Un premier objectif de l'invention est donc de proposer une amélioration d'un dispositif tel que présenté en introduction, qui permette de réduire les sollicitations et l'usure subies par celui-ci lors de ses activations et désactivations.

Ce premier objectif est atteint grâce au fait que dans le dispositif, ledit au moins un moteur est agencé de telle sorte que lorsque les pressions dans les orifices d'alimentation et d'échappement dudit au moins un moteur sont égales, le couple de sortie dudit au moins un moteur est nul ; et que l'unité de commande est apte à opérer le dispositif dans un mode « sans couple » en régulant la cylindrée de la pompe de telle sorte que les pressions auxdits orifices d'alimentation et d'échappement demeurent sensiblement égales.

Comme ces pressions sont sensiblement égales, dans ce mode de fonctionnement ledit au moins un moteur ne délivre aucun couple.

On notera que l'expression 'lesdits orifices d'alimentation et d'échappement dudit au moins un moteur' désigne au moins un orifice d'alimentation et au moins un orifice d'échappement du ou des moteurs. Il s'agira en général d'un seul orifice d'alimentation et d'un seul orifice d'échappement, reliés respectivement aux orifices de refoulement et d'admission de la pompe. Ces orifices peuvent être identifiés comme une section d'une conduite d'alimentation ou d'échappement.

Par ailleurs, l'invention est notamment applicable à un dispositif comprenant plusieurs moteurs hydrauliques, dont les orifices d'alimentation et d'échappement par exemple de chacun d'entre eux sont équipé de capteurs de pression ; le dispositif comprenant des moyens pour réguler pour chaque moteur les pressions entre les orifices d'alimentation et d'échappement de celui-ci, de telle sorte que ces pressions restent sensiblement égales.

L'invention est par ailleurs applicable à un dispositif dans lequel le circuit hydraulique reliant la pompe au(x) moteur(s) peut être soit ouvert, soit fermé.

On comprend qu'en mode « sans couple », la circulation de fluide entre la pompe et le ou les moteur(s) n'est pas interrompue, et le dispositif de transmission hydraulique reste à l'état 'activé'.

Au cas où le dispositif comprend une valve d'activation apte à isoler le ou les moteur(s) de la pompe, la position de cette valve d'activation n'est donc pas modifiée lors du passage en mode sans couple.

Ainsi avantageusement dans le mode sans couple, grâce à la régulation de la cylindrée de la pompe effectuée par l'unité de commande, le dispositif de transmission produit les mêmes effets que si la valve d'activation était placée en position de bipasse, à savoir ne produit aucun couple sur l'organe de sortie du ou des moteurs. Le dispositif de transmission hydraulique fonctionne ainsi comme s'il était bipassé, bien qu'il ne soit pas bipassé physiquement dans une ligne dédiée, le fluide hydraulique continuant à circuler entre la pompe et le ou les moteur(s).

Par conséquent, il n'est plus nécessaire de prévoir dans le circuit une valve d'activation telle que décrite précédemment.

Cependant dans certains modes de réalisation, cette valve peut être prévue. Le dispositif de transmission hydraulique comprend alors une valve d'activation, apte dans une première position à mettre en communication la pompe avec le ou les moteur(s) pour alimenter celui-ci ou ceux-ci, et dans une deuxième position au contraire à isoler la pompe du ou des moteur(s). On comprend implicitement que la mise en communication de la pompe avec le ou les moteurs fait référence à la mise en communication des deux orifices principaux de la pompe avec respectivement les orifices d'alimentation et d'échappement du ou des moteurs.

Au sein du dispositif, l'unité de commande peut être agencée de différentes manières pour opérer le dispositif dans un mode sans couple.

Dans un mode de réalisation, le dispositif comprend en outre des capteurs de pression, aptes à transmettre à l'unité de commande des valeurs de pression aux orifices d'alimentation et d'échappement dudit au moins un moteur ; et l'unité de commande est agencée de manière à, en mode sans couple, déterminer et réguler la cylindrée de la pompe sur la base des informations de pression donnée par les capteurs de pression.

Le mode 'sans couple' peut par ailleurs être optimisé de la manière suivante : Dans un mode de réalisation, le dispositif de transmission hydraulique peut comprendre en outre une valve d'échange, reliée aux orifices d'alimentation et d'échappement dudit au moins un moteur, et agencée de telle sorte que la plus faible des pressions régnant auxdits orifices n'excède pas une valeur prédéterminée. La valeur prédéterminée est choisie suffisamment faible pour que la circulation de fluide dans les moteurs, en mode sans couple, consomme le moins d'énergie possible.

D'autre part, dans le cas où le ou les moteur(s) sont des moteurs à pistons radiaux décrabotables, le dispositif peut notamment comprendre des moyens pour assurer qu'en mode sans couple, les pistons restent rentrés dans les cylindres.

Dans ce cas, si les moteurs sont des moteurs dans lesquels la rentrée des pistons dans les cylindres des moteurs a lieu lorsque la pression dans les conduits de cylindre devient inférieure à une pression de rétraction, la valeur prédéterminée indiquée précédemment est choisie inférieure à la pression de rétraction. Par suite, en mode sans couple les pistons sont rétractés à l'intérieur des cylindres des moteurs.

L'invention peut être mise en oeuvre notamment dans un véhicule équipé d'une transmission principale, dans lequel le dispositif de transmission hydraulique selon l'invention constitue la transmission auxiliaire. La transmission principale peut être notamment mécanique, hydraulique, ou électrique.

Le dispositif de transmission hydraulique selon l'invention est alors un dispositif d'assistance hydraulique, qui ne sert qu'en appoint à l'entraînement du véhicule. Il permet en général de rendre motrices les roues d'un essieu qui ne sont pas entraînées par la transmission principale ; ces roues peuvent être des roues avant ou arrière.

Par exemple, dans un mode de réalisation le véhicule peut comprendre un moteur à combustion interne, et une transmission principale mécanique, et la pompe est entraînée par un arbre de sortie lié au moteur à combustion interne ou à une boîte de vitesse couplée à celui-ci.

Dans un autre mode de réalisation, la transmission principale est hydraulique et comprend sa propre pompe, commandée en fonction de la vitesse souhaitée pour le véhicule. La pompe du dispositif selon l'invention (constituant la transmission auxiliaire) est pilotée en revanche suivant des paramètres autres que la vitesse du véhicule, par exemple en fonction de pressions minimales à respecter.

Dans ce mode de réalisation les cylindrées des pompes de la transmission principale et de la transmission auxiliaire sont donc pilotées suivant des critères tout-à-fait différents, et cela y compris lorsque ces pompes sont toutes deux entrainées par un même arbre de sortie du moteur principal du véhicule.

Lorsque le dispositif selon l'invention constitue une transmission auxiliaire, et que le véhicule est donc équipé à la fois d'une transmission principale et d'une transmission auxiliaire, l'utilisation d'une valve d'activation présente les avantages suivants :
Lorsque le véhicule atteint une vitesse élevée, la vitesse de rotation des roues peut être trop élevée pour les moteurs hydrauliques attelés aux roues et faisant partie de la transmission auxiliaire. Il est alors nécessaire de débrayer ces moteurs.

Dans ce but, il peut être utile que le dispositif comporte une valve d'activation, qui permette à cette vitesse d'isoler la pompe de ces moteurs. Cela permet que le véhicule équipé du dispositif de transmission puisse se déplacer à une vitesse plus élevée que la vitesse atteinte lorsque le débit traversant ce ou ces moteur(s) atteint le maximum admissible pour ceux-ci.

De plus, la mise hors fonction (notamment le décrabotage par rétractation des pistons) effective de ces moteurs grâce à la valve d'activation permet d'améliorer le rendement énergétique du dispositif de transmission dans les modes d'utilisation où l'assistance n'est pas sollicitée. Cette mise hors fonction permet en effet d'éviter les frottements des moteurs hydrauliques (trainée hydraulique), qui sont relativement élevés.

Lorsque le dispositif est monté sur un véhicule, l'invention peut être implémentée de la manière suivante.

Le véhicule comporte des organes de déplacement, par exemple des roues, qui permettent son déplacement. On suppose pour l'explication qui suit que ces organes de déplacement sont des roues, et on suppose qu'une partie des roues sont entraînées par les moteurs hydrauliques du dispositif. (Ce mode de réalisation peut cependant être mis en oeuvre pour d'autres types d'organes de déplacement, par exemple des chenilles, et/ou lorsque le dispositif ne comprend qu'un seul moteur hydraulique).

Pendant les déplacements, la vitesse du véhicule impose aux roues une certaine vitesse de rotation.

Cette propriété peut être exploitée de la manière suivante : lorsque les roues à entraînement hydraulique sont entraînées par les moteurs hydrauliques à la vitesse de rotation imposée par la vitesse du véhicule, elles délivrent un couple nul. Elles sont donc *de facto* opérées en mode sans couple, et les pressions aux orifices principaux d'alimentation et d'échappement des moteurs hydrauliques sont égales.

Cette propriété permet donc de réaliser l'invention de la manière suivante.

Le dispositif peut comprendre des moyens d'acquisition aptes à transmettre à l'unité de commande des informations permettant de déterminer une valeur de vitesse de rotation d'un organe de déplacement du véhicule utilisé comme référence (par exemple, la vitesse de rotation d'une roue), et un capteur de vitesse de pompe, apte à transmettre à l'unité de commande des informations permettant de déterminer la vitesse de rotation du rotor de la pompe.

L'unité de commande peut alors être agencée de manière, en mode sans couple, à déterminer la valeur de vitesse de rotation de l'organe de déplacement de référence et la vitesse de rotation du rotor de la pompe, et à réguler le débit de la pompe en fonction de la vitesse de rotation du rotor de la pompe de telle sorte que l'organe de sortie dudit au moins un moteur tourne à une vitesse égale à celle déterminée pour l'organe de déplacement de référence.

En effet, comme la vitesse de rotation de l'organe de déplacement de référence peut être déterminée, il est possible compte tenu de la cylindrée du ou des moteurs hydrauliques de déterminer le débit de fluide nécessaire au(x) moteur(s) hydraulique(s) pour que le ou les organe(s) de sortie du ou des moteurs tourne(nt) à cette vitesse.

Une fois ce débit déterminé, on peut compte tenu de la vitesse de rotation de la pompe déterminer la cylindrée de pompe nécessaire pour produire ce débit et réguler ainsi le débit de la pompe à une valeur adéquate pour que les moteurs hydrauliques soient entraînés à la même vitesse que l'organe de déplacement de référence.

Ce mode de réalisation concerne notamment des véhicules ayant d'une part des roues entraînées par une transmission principale (mécanique ou autre), et d'autre part des roues entraînées par la transmission auxiliaire constituée par le dispositif de transmission hydraulique.

Dans ce cas, l'organe de déplacement utilisé comme référence est de préférence une roue du véhicule entraînée par la transmission principale.

La régulation de cylindrée de la pompe décrite précédemment permet que les roues entraînées par le ou les moteurs hydrauliques tournent à la même vitesse que les roues entraînées par la transmission principale.

Optionnellement, le dispositif de transmission hydraulique peut comprendre en outre des capteurs de pression, aptes à transmettre à l'unité de commande des valeurs de pression aux orifices d'alimentation et d'échappement dudit au moins un moteur, et l'unité de commande peut être agencée de manière à, en mode sans couple, vérifier que l'écart entre les pressions aux orifices d'alimentation et d'échappement dudit au moins un moteur est inférieur à une valeur prédéterminée, sur la base des informations de pression donnée par lesdits capteurs de pression.

Au cas où l'écart des pressions dépasse la valeur prédéterminée choisie, par exemple une alerte peut être transmise au conducteur du véhicule pour qu'il prenne les dispositions nécessaires.

Le capteur de vitesse de pompe peut être tout équipement collectant des informations permettant de déterminer la vitesse de rotation du rotor de la pompe. Ce capteur peut comprendre par exemple un capteur de vitesse d'un moteur thermique relié à la pompe, la vitesse du moteur thermique étant représentative de la vitesse de rotation du rotor de la pompe.

Les moyens d'acquisition cités précédemment, qui fournissent les informations permettant de déterminer la vitesse de rotation de l'organe de déplacement de référence, peuvent être un capteur mesurant directement la vitesse de rotation d'un arbre entraîné par un moteur hydraulique.

Ces moyens d'acquisition peuvent aussi comprendre notamment un capteur mesurant la vitesse de rotation d'une roue, par exemple par un capteur ABS associé à la roue.

Ces moyens d'acquisition peuvent également comprendre un système d'acquisition apte à fournir la vitesse du véhicule à un instant donné ; un tel système d'acquisition peut être par exemple un GPS indiquant la vitesse du véhicule. Dans ce dernier cas, la vitesse de rotation de l'organe de déplacement de référence est alors déterminée à partir de la vitesse du véhicule.

Dans le cas d'un véhicule à moteur thermique comportant une transmission principale avec boîte de vitesses, en plus de la transmission auxiliaire hydraulique, les moyens d'acquisition peuvent comprendre un capteur ou système indiquant le rapport de boîte de vitesse qui est enclenché, et un second capteur indiquant la vitesse de rotation du moteur thermique. La vitesse de rotation de l'organe de déplacement de référence est alors déterminée en combinant les informations fournies par ces deux capteurs.

En plus du fonctionnement en mode 'sans couple', le dispositif selon l'invention peut comporter d'autres modes de fonctionnement.

Lorsqu'il est mis en oeuvre sur un véhicule présentant des organes de déplacement (par exemple des roues) avant et des organes de déplacement arrière par rapport au sens de déplacement du véhicule, le dispositif selon l'invention présente généralement un mode de fonctionnement principal qui est dit 'mode d'assistance'. En ce mode de fonctionnement, le ou les moteur(s) sont alimentés par la pompe de manière à pouvoir délivrer un couple moteur ; et la cylindrée de la pompe est généralement maintenue à une valeur fixe Cy. Cette cylindrée Cy est déterminée de telle sorte que la vitesse de rotation des organes de déplacement avant ne soit pas inférieure (et soit en pratique généralement légèrement supérieure) à la vitesse de rotation des organes de déplacement arrière.

Dans le cas où le dispositif est monté sur un véhicule comportant une transmission principale à boîte de vitesse, et une transmission hydraulique auxiliaire constituée par le dispositif, il y a une valeur de cylindrée Cy par rapport de vitesse que comporte la boîte de vitesse du véhicule.

Le fait que la cylindrée de la pompe est 'généralement' maintenue à une valeur fixe signifie qu'il est possible que néanmoins, dans certaines circonstances particulières, la cylindrée de la pompe soit régulée au lieu d'être maintenue fixe. Un exemple de telles circonstances particulières sera développé par la suite.

Le maintien de la cylindrée de la pompe à une valeur fixe a pour effet que le couple moteur augmente d'autant plus que la vitesse de rotation du moteur principal entraînant la pompe est élevée : Ainsi avantageusement le couple moteur augmente d'autant plus que les roues entraînées par la transmission principale patinent.

Le mode d'assistance consiste normalement à faire fonctionner le dispositif de transmission hydraulique en maintenant la cylindrée de la pompe à la valeur fixe Cy présentée précédemment.

Cependant, en pratique en mode d'assistance il est préférable que le ou les moteurs délivrent à chaque instant un couple moteur minimal. Pour assurer ce résultat, en mode d'assistance la pression d'alimentation des moteurs est régulée à certains moments, de manière à rester supérieure à une valeur minimale prédéterminée.

Selon une variante, le mode d'assistance peut donc également consister dans le fonctionnement suivant : Si la pression à l'orifice d'alimentation du ou des moteur(s) est supérieure ou égale à une pression-seuil, la cylindrée de la pompe est maintenue fixe ; si la pression à l'orifice d'alimentation du ou des moteur(s) tend à devenir inférieure à la pression-seuil, la cylindrée de la pompe est régulée de telle sorte que la pression à l'orifice d'alimentation soit sensiblement égale à la pression-seuil.

Par ailleurs, dans un autre mode de fonctionnement moteur envisageable dans un dispositif selon l'invention, l'unité de commande opère le dispositif de telle sorte que la pression d'alimentation dudit au moins un moteur reste supérieure d'au moins une valeur prédéterminée à la pression à l'orifice d'échappement du ou des moteur(s).

Le dispositif selon l'invention peut en outre présenter un mode de freinage. Dans ce mode, la cylindrée de la pompe est régulée de telle sorte que la pression à l'orifice d'échappement du ou des moteur(s) est supérieure à la pression à l'orifice d'alimentation du ou des moteur(s) d'une valeur fonction d'une commande de freinage transmise au véhicule ou à la machine dont fait partie le dispositif -.

Le dispositif selon l'invention peut enfin présenter également un mode de fonctionnement, dit 'mode de retenue', dans lequel un couple de freinage relativement faible est délivré sur l'organe de sortie du ou des moteur(s). Dans ce mode de fonctionnement, l'unité de commande opère le dispositif en régulant la cylindrée de la pompe de telle sorte que la pression à l'orifice d'échappement dudit au moins un moteur soit supérieure d'au moins une valeur prédéterminée (par exemple au moins 10 Bars, et de préférence au moins 20 Bars) à la pression à l'orifice d'alimentation du ou des moteur(s). L'utilité de ce mode de fonctionnement sera développée par la suite.

L'invention trouve une application particulièrement intéressante sous la forme de dispositifs de transmission hydraulique de véhicules, pour améliorer le fonctionnement de ceux-ci lors du freinage.

Ainsi, un second objet de l'invention est un véhicule comportant un dispositif de freinage, un dispositif de transmission hydraulique tel que défini précédemment, et au moins un organe de déplacement entraîné par ledit au moins un moteur ; le véhicule présentant un mode de fonctionnement dans lequel, lorsque le dispositif de freinage est actionné, l'unité de commande opère le dispositif de transmission hydraulique en mode sans couple.

Avantageusement, en mode sans couple lors du freinage, sans que ni un bipasse du dispositif de transmission hydraulique ni un changement de position d'une éventuelle valve d'activation ne soient nécessaires, le dispositif de transmission hydraulique se trouve placé dans un mode dans lequel il ne perturbe en aucune manière le freinage du véhicule, puisqu'aucun couple n'est délivré par le ou les moteur(s).

Naturellement, le véhicule peut présenter pour le freinage d'autres modes de fonctionnement que le mode 'sans couple' indiqué ci-dessus. En complément du mode 'sans couple', il peut ainsi notamment présenter un mode de fonctionnement dans lequel le dispositif de transmission hydraulique est désactivé et, lorsque le dispositif de freinage est actionné, l'unité de commande n'intervient pas et ainsi n'opère pas le dispositif de transmission hydraulique en mode sans couple.

Dans un mode de réalisation, l'unité de commande est agencée pour, à l'issue d'un freinage, opérer automatiquement le dispositif en mode de retenue.

Dans la phrase précédente, le terme 'automatiquement' signifie qu'aucune action du conducteur du véhicule, autre que l'action principale ou première - en l'occurrence, l'arrêt de l'appui sur la pédale de frein - n'est nécessaire pour obtenir le fonctionnement souhaité, à savoir dans le cas présent placer le dispositif en mode de retenue.

Une telle capacité du véhicule est particulièrement utile ou importante car à l'issue du freinage, c'est-à-dire lorsque la commande de freinage cesse d'être transmise ou appliquée au véhicule (le conducteur relâche la pédale de frein), il peut être souhaitable, notamment dans une descente, que le dispositif de transmission hydraulique ne redevienne pas moteur immédiatement après l'arrêt du freinage. En effet cette réactivation dans une descente pourrait provoquer une accélération dangereuse du véhicule.

Si l'unité de commande est agencée de manière à opérer le dispositif de transmission hydraulique en mode de retenue dès l'interruption ou l'arrêt du freinage (jusqu'à ce qu'une nouvelle commande soit transmise à l'unité de commande), le conducteur est assuré que le dispositif de transmission hydraulique n'apportera pas de couple moteur indésirable au moment où il relâche son pied de la pédale de frein.

En mode de retenue, il est par conséquent nécessaire d'appliquer une commande supplémentaire au véhicule, pour réactiver le dispositif de transmission hydraulique et le placer en mode d'assistance.

Dans ce but, l'unité de commande peut être agencée pour, si une commande d'accélération est transmise au véhicule alors que celui-ci est en mode de retenue, faire passer automatiquement le dispositif de transmission hydraulique en mode d'assistance.

Ainsi lorsque le dispositif est en mode de retenue, une seule action du conducteur du véhicule (une pression sur la pédale d'accélérateur) suffit pour faire passer le dispositif de transmission hydraulique du mode de retenue au mode d'assistance.

Avantageusement, les différents modes de fonctionnement indiqués précédemment (retenue, sans couple, assistance) peuvent être mis en oeuvre alors que le dispositif de transmission reste activé ; c'est-à-dire que, si par exemple le dispositif comprend une valve d'activation telle que décrite précédemment, le dispositif peut être opéré dans ces différents modes de fonctionnement alors que la valve d'activation reste en position d'activation.

Le passage de l'un à l'autre des différents modes de fonctionnement du dispositif de transmission hydraulique peut être déclenché par le conducteur du véhicule. Par exemple, le passage en mode sans couple, retenue ou assistance peut s'effectuer sur commande du conducteur du véhicule.

Cette commande peut être à effet immédiat ou différé (temporisé).

Le passage d'un mode de fonctionnement à un autre peut également être déclenché de manière automatique par l'unité de commande du dispositif, lorsque des conditions prédéterminées requises pour un tel changement sont réunies.

L'unité de commande peut ainsi déclencher le passage du mode de retenue au mode d'assistance, ou inversement, en fonction d'un ou plusieurs paramètres choisis parmi la vitesse du véhicule, le rapport de boite de vitesse engagé, la position de la pédale d'accélérateur, et plus généralement la valeur fournie par tout autre capteur, un inclinomètre par exemple. (Le rapport de boîte de vitesse désigne ici le rapport d'une boîte de vitesse de la transmission principale mécanique, pour un véhicule comportant une telle transmission principale et une transmission hydraulique constituée par le dispositif hydraulique selon l'invention).

L'unité de commande peut par exemple déclencher le passage du mode de retenue au mode d'assistance lorsque la position de la pédale d'accélérateur dépasse une valeur prédéfinie, typiquement 15% de la course de la pédale, et de préférence sous réserve que la vitesse du véhicule soit supérieure à une vitesse minimale prédéterminée.

L'unité de commande peut par exemple déclencher le passage du mode retenue au mode sans couple lorsque la vitesse du véhicule est inférieure à une valeur prédéterminée, par exemple 1 km/h.

L'unité de commande peut par exemple déclencher le passage du mode assistance au mode retenue lorsque la position de la pédale d'accélérateur est inférieure à une valeur prédéterminée, par exemple 5% de la course de la pédale, et/ou lorsqu'une information de descente (détectée par exemple par un inclinomètre, par un système de positionnement par satellite GPS, et/ou encore par l'utilisation du frein de service) est reçue par l'unité de commande.

Dans le cas où le dispositif comporte une valve d'activation, apte dans une première position à mettre en communication la pompe avec ledit au moins un moteur pour alimenter celui-ci, et dans une deuxième position au contraire à isoler la pompe dudit au moins un moteur, l'unité de commande peut être prévue pour :
- immédiatement après un passage de la valve d'activation de la deuxième à la première position (c'est-à-dire, lors du passage en mode activé), et/ou immédiatement avant un passage de la valve d'activation de la première à la deuxième position (c'est-à-dire, lors du passage en mode désactivé), soit opérer le dispositif en mode sans couple, ou soit réguler la cylindrée de la pompe de telle sorte que la pression d'alimentation dudit au moins un moteur soit au moins égale à une valeur prédéterminée (le premier de ces modes de pilotage permet d'éviter un à-coup lors de l'activation ou de la désactivation de l'assistance hydraulique) ; et/ou
- déclencher le passage de la valve d'activation de la première à la deuxième position (c'est-à-dire, lors du passage en mode désactivé) lorsque la position de la pédale d'accélérateur devient inférieure à une valeur prédéterminée et que le rapport de boîte de vitesse engagé est strictement inférieur à un rapport de boîte de vitesse maximal pouvant être engagé avec le dispositif hydraulique.

Un deuxième objectif de l'invention est de proposer un procédé de commande d'un dispositif de transmission hydraulique, le dispositif comprenant une pompe à débit variable, au moins un moteur hydraulique, alimenté par la pompe, et une unité de commande ; qui permette de réduire les sollicitations et l'usure subies par le dispositif de transmission hydraulique lors de ses activations et désactivations.

Cet objectif est atteint grâce au fait que dans le dispositif de transmission hydraulique, le ou les moteur(s) sont agencés de telle sorte que lorsque les pressions dans les orifices d'alimentation et d'échappement du ou des moteurs sont égales, le couple de sortie du ou des moteurs est nul ; et grâce au fait que pendant une période (période de débrayage du dispositif) on opère le dispositif dans un mode « sans couple », dans lequel on régule la cylindrée de la pompe de telle sorte que les pressions auxdits orifices d'alimentation et d'échappement demeurent sensiblement égales.

Le fait de faire fonctionner le dispositif en mode « sans couple » permet de débrayer le dispositif et de le placer dans un état dans lequel aucun couple n'est appliqué par le ou les moteurs. Avantageusement, le mode « sans couple » peut être utilisé sans qu'il soit nécessaire de faire changer de position une valve d'activation.

La régulation de la pompe pour la mise en oeuvre du mode sans couple peut se faire de différentes manières.

Dans un mode de mise en oeuvre du procédé, le dispositif comporte des capteurs de pression, aptes à transmettre à l'unité de commande les valeurs de pression à des orifices d'alimentation et d'échappement dudit au moins un moteur ; et en mode sans couple, on détermine la cylindrée de la pompe sur la base des informations de pression donnée par lesdits capteurs de pression.

Un autre mode de mise en oeuvre concerne le cas où le dispositif est monté sur un véhicule.

Dans ce cas, dans un mode de mise en oeuvre du procédé, on acquiert la valeur de vitesse de rotation d'un organe de déplacement du véhicule utilisé comme référence, et la valeur de vitesse de rotation du rotor de la pompe ; et en mode sans couple, on régule le débit de la pompe en fonction de la vitesse de rotation du rotor de la pompe de telle sorte que l'organe de sortie du ou des moteurs hydraulique(s) tourne à une vitesse égale à celle de l'organe de déplacement de référence.

Par ailleurs, le procédé peut être perfectionné en permettant en outre d'opérer le dispositif dans le mode de retenue cité précédemment, dans lequel on régule la cylindrée de la pompe de telle sorte que la pression à l'orifice d'échappement dudit au moins un moteur est supérieure d'au moins une valeur prédéterminée à la pression à l'orifice d'alimentation dudit au moins un moteur.

Le procédé peut être mis en oeuvre notamment lorsque le dispositif de transmission hydraulique est monté sur un véhicule à entraînement hydraulique, comportant un dispositif de freinage, un dispositif de transmission hydraulique tel que présenté précédemment, et au moins un organe de déplacement entraîné par ledit au moins un moteur.

Dans le cas plus particulier où le dispositif est monté sur un véhicule ayant deux essieux à roues entraînées, un essieu avant parmi lesdits essieux étant situé en avant de l'autre essieu, dit essieu arrière, par rapport au sens de déplacement du véhicule, et les roues d'un seul desdits essieux étant entraînées par le dispositif de transmission hydraulique, le procédé peut permettre en outre, pendant une période d'assistance, d'opérer le dispositif dans un mode de fonctionnement dans lequel la cylindrée de la pompe est généralement maintenue à une valeur fixe déterminée de telle sorte que la vitesse de rotation des roues de l'essieu avant ne soit pas inférieure à la vitesse de rotation des roues de l'essieu arrière.

Dans la définition précédente, un essieu à roues entraînées désigne un groupe de roues (ou d'autres organes de déplacement) qui sont au même niveau par rapport à la direction longitudinale du véhicule, et qui sont entraînées, que ce soit par une transmission mécanique, hydraulique ou autre.

Le fait que la vitesse de rotation des roues de l'essieu avant ne soit pas inférieure à la vitesse de rotation des roues de l'essieu arrière a pour effet de mettre le véhicule sous une légère tension qui facilite la conduite de celui-ci.

Les différents modes de fonctionnement du dispositif présentés plus haut peuvent notamment être déclenchés dans les circonstances suivantes (indépendamment ou en combinaison) :
- pendant que le dispositif de freinage du véhicule est actionné, on opère le dispositif de transmission hydraulique en mode sans couple ;
- quand on arrête d'actionner le dispositif de freinage du véhicule, on opère le dispositif de transmission hydraulique en mode de retenue ; et
- si alors qu'on est en mode de retenue, on accélère, on place alors le dispositif de transmission hydraulique en mode d'assistance.

L'invention sera bien comprise et ses avantages apparaîtront mieux à la lecture de la description détaillée qui suit, d'un mode de réalisation représenté à titre d'exemple non limitatif. La description se réfère aux dessins annexés, sur lesquels :
- la figure 1 est une vue schématique d'un premier mode de réalisation du dispositif selon l'invention ;
- la figure 2 est un ensemble de courbes présentant les variations de différents paramètres, dans un véhicule sur lequel est monté un dispositif selon l'invention, lors de la mise en oeuvre du procédé selon l'invention ; et
- la figure 3 est une vue schématique d'un second mode de réalisation du dispositif selon l'invention.

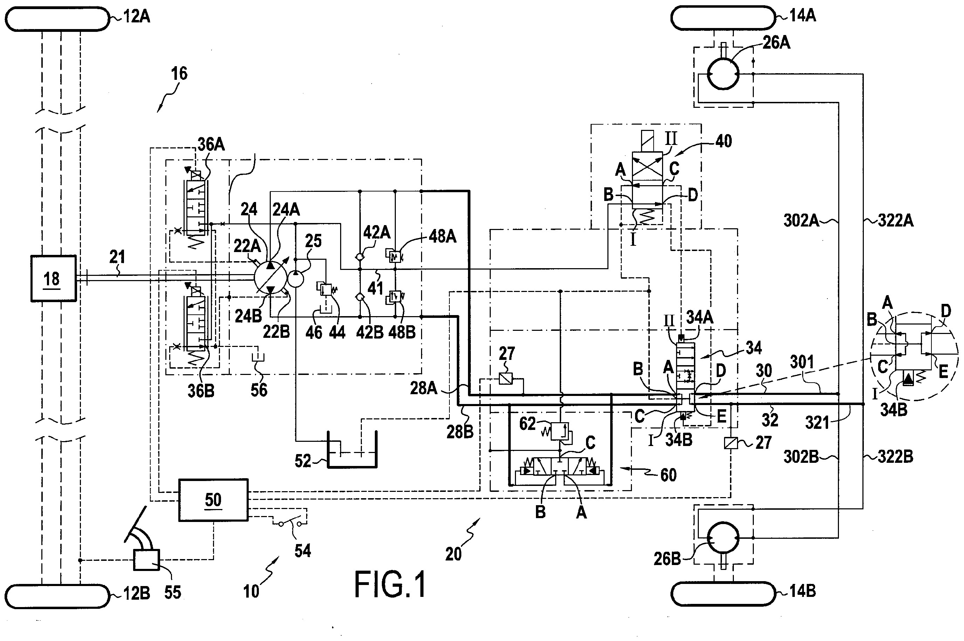

La figure 1 représente un véhicule 10 sur lequel est monté un dispositif de transmission hydraulique 20 selon l'invention.

Le véhicule 10 est un véhicule ayant deux roues arrière 12A, 12B, et deux roues avant 14A, 14B. L'entraînement du véhicule est assuré en régime normal par une transmission principale 16. Celle-ci relie un moteur à combustion interne 18 aux roues arrière 12A et 12B, et assure ainsi seule l'entraînement du véhicule la plupart du temps.

Bien que ce mode de réalisation comporte un moteur 18 de type à combustion interne, l'invention peut être mise en oeuvre avec tout type de moteur, notamment à combustion interne (essence, GPL, etc.), électrique, etc.

Pour assurer la propulsion du véhicule dans des conditions de route difficiles (route en pente ou déclive, route glissante, etc.), le véhicule comporte également une transmission auxiliaire, constituée par le dispositif de transmission hydraulique 20. Celui-ci permet de rendre motrices les deux roues 14A et 14B, qui ne sont pas motrices en temps normal. Ainsi grâce à la transmission auxiliaire 20, le véhicule dispose de modes de fonctionnement dans lesquels les quatre roues 12A, 12B, 14A et 14B sont motrices.

Bien que dans ce mode de réalisation, l'assistance hydraulique soit appliquée aux roues avant 14A et 14B, elle pourrait tout aussi bien être appliquée à des roues arrière.

La transmission auxiliaire 20 est couplée à un arbre 21 qui est lié à la sortie de puissance du moteur 18, duquel elle tire l'énergie qu'elle transmet aux roues 14A, 14B lorsqu'elle est activée.

La transmission auxiliaire 20 constitue un dispositif de transmission hydraulique au sens de l'invention, appelé encore 'assistance hydraulique'. Ce dispositif transmet une partie de l'énergie du moteur 18 aux roues 14A, 14B, et assure de plus différentes fonctions : activation/désactivation de la transmission auxiliaire ; mise en sécurité des organes de la transmission auxiliaire pendant le mode désactivé, etc.

Pour l'entraînement des roues 14A, 14B, le dispositif de transmission hydraulique 20 comporte tout d'abord deux sources de fluide sous pression : une pompe principale 24, et une pompe auxiliaire 25 prévue pour maintenir une pression de fluide minimale dans différents conduits du dispositif.

La pompe principale 24 est une pompe réversible à débit variable, du type à plateau oscillant.

Les pompes principale 24 et auxiliaire 25 sont reliées toutes les deux à l'arbre de sortie 21 du moteur 18, et sont donc actionnées conjointement par celui-ci.

Les pompes 24 et 25 sont pilotées suivant des logiques différentes : La pompe 24 a une cylindrée variable, qui peut être régulée en modifiant la position de son plateau-came. Au contraire, la pompe 25 a une cylindrée fixe ; sa pression de refoulement est limitée par le limiteur de pression 44 de manière à maintenir une pression minimale donnée (la 'pression de gavage') dans différents conduits du circuit.

La pompe principale 24 est prévue pour alimenter en fluide sous pression deux moteurs hydrauliques 26A, 26B attelés respectivement aux deux roues 14A, 14B. Pour cela, la pompe 24 présente deux conduits de pompe 28A, 28B, reliés à ses orifices principaux 24A, 24B.

Ces conduits de pompe 28A, 28B peuvent être mis en communication respectivement avec deux conduits de moteur 30, 32. Chacun de ces conduits de moteur a une première partie 301, 321 apte à être reliée à un conduit de pompe, et une deuxième partie dans laquelle chacun se divise en deux branches 302A,302B, et 322A,322B respectivement, reliées à des enceintes d'alimentation et d'échappement des moteurs 26A et 26B.

La pression dans celle des conduites de pompe 28A, 28B dont la pression est la plus faible est limitée par une valve d'échange 60. Cette valve 60 est une valve à trois positions, avec deux voies amont A et B, une voie aval C, deux chambres de commande hydrauliques antagonistes.

Les voies amont A et B sont reliées respectivement aux conduites de pompe 28A et 28B. La voie aval C est reliée via un limiteur de pression 62 à un réservoir sans surpression (à la pression atmosphérique) 52.

La valve 60 est ramenée en position médiane par des ressorts de rappel antagonistes ayant des forces de rappel égales.

Dans sa position médiane, qui est adoptée lorsque les pressions dans les deux conduites de pompe sont sensiblement égales, la valve d'échange 60 maintient les trois voies A, B et C isolées.

Inversement, les positions extrêmes correspondent aux situations suivantes : Lorsque l'écart de pression entre les conduites de pompe 28A, 28B excède une valeur prédéterminée, la valve d'échange se place dans la position extrême dans laquelle elle met en relation la voie amont reliée à la conduite de plus basse pression avec la voie C.

Par conséquent, lorsque les pressions dans les deux conduites de pompe ne sont pas égales, la conduite de pompe de plus basse pression évacue du fluide vers le réservoir 52 tant que la pression qui y règne reste supérieure à la pression de tarage du limiteur de pression 62.

Par suite, lorsque les pressions dans les deux conduites de pompe ne sont pas égales, la valve d'échange 60 impose que la pression dans la conduite de plus basse pression reste égale à la valeur de cette pression de tarage, dite pression d'échange P_{E}. Sur le véhicule 10, cette pression P_{E} est égale à 22 Bar.

On notera que dans le dispositif 20, la valve d'échange 60 est optionnelle. Elle n'est pas nécessaire au fonctionnement de l'invention.

De manière connue en soi, les moteurs 26A, 26B sont des moteurs hydrauliques à pistons radiaux, similaires aux moteurs décrits par exemple dans le brevet français n°2 504 987.

Ces moteurs peuvent être engagés ou désengagés (embrayés ou débrayés) en faisant en particulier, mais pas seulement, varier la pression régnant dans leurs carters.

Chacun des moteurs 26A, 26B comporte un arbre de sortie, relié respectivement aux roues 14A, 14B. Sous l'effet de la différence de pression imposée par la pompe principale entre les conduits de pompe, et donc entre les conduits de moteur, en mode moteur les moteurs 26A et 26B délivrent un couple moteur qui leur permet d'entraîner les roues 14A, 14B.

Dans le cas où la différence de pression imposée par la pompe principale s'inverse entre les conduits de pompe, et donc entre les conduits de moteur (la pression à l'orifice de refoulement de la pompe 24A étant alors inférieure à la pression à son orifice d'alimentation 24B), le dispositif 20 est inversement en mode de freinage, et les moteurs 26A et 26B délivrent un couple de freinage qui tend à freiner les roues 14A, 14B.

La mise en communication des conduits de pompe 28A, 28B et des conduits de moteur 30, 32 est réalisée au moyen d'une valve d'activation 34.

La fonction générale de cette valve 34 est d'activer ou de désactiver la transmission hydraulique auxiliaire (c'est-à-dire, le dispositif d'assistance hydraulique 20) :
- en mode désactivé, seule la transmission principale sert à l'entraînement du véhicule ; et
- en mode activé, la transmission principale et la transmission hydraulique peuvent entraîner conjointement le véhicule. Cependant dans ce mode, la transmission hydraulique 20 peut par moments être inactive (ou débrayée) et les moteurs ne délivrer aucun couple, à savoir lorsque le dispositif est opéré dans le mode sans couple présenté précédemment.

La valve 34 présente trois voies amont A, B, C, deux voies aval D et E, et deux positions I et II. Une position intermédiaire occupée de manière seulement transitoire est également représentée sur la figure 1.

La valve d'activation 34 comporte en outre deux chambres de commande hydraulique 34A, 34B.

Dans ce texte, les termes 'amont' et 'aval' appliqués aux voies d'une valve désignent en général le sens le plus fréquent de circulation du fluide ou de transmission d'une commande, sans que cela n'exclue d'autres modes de fonctionnement.

Les voies A et C sont reliées respectivement aux conduits de pompe 28A et 28B. La voie B est reliée au réservoir 52.

Les voies D et E sont reliées respectivement aux premières parties 301 et 321 des conduits de moteur 30 et 32, et ainsi sont reliées respectivement aux orifices d'alimentation et d'échappement des moteurs 26A et 26B.

Les chambres de commande 34A et 34B sont reliées respectivement aux voies C et D d'une valve de commande 40 qui va être décrite plus loin.

La valve d'activation 34 comporte en outre un ressort de rappel qui tend à la maintenir dans la première position I.

Dans la première position I, les voies B, D et E sont reliées, et les voies A et C sont reliées. Dans la deuxième position II, les voies A et D sont reliées, les voies C et E sont reliées, et la voie B est isolée.

Comme le montre la case intermédiaire représentée sur la figure 1 pour la valve 34, en position intermédiaire entre les positions I et II, les quatre voies A, C, D et E sont reliées via des restrictions, la voie B étant au contraire isolée.

Ainsi, en première position I, les conduits de pompe 28A, 28B sont reliés l'un à l'autre (position de bipasse). De plus, les conduits de moteur 30 et 32 sont reliés l'un à l'autre ; ils sont reliés en outre au réservoir sans surpression 52. Dans cette position, les pistons des moteurs 26A et 26B se placent en position rétractée dans les cylindres de ces moteurs, de telle sorte que les moteurs 26A et 26B sont débrayés.

En deuxième position II inversement, les conduits de moteurs sont reliés aux conduits de pompe et alimentent les moteurs 26A, 26B pour qu'ils entraînent les roues 14A, 14B. Cette position est adoptée pour placer le véhicule en mode à quatre roues motrices et correspond à l'état activé de la transmission hydraulique 20.

L'alimentation en fluide du dispositif 20 se fait de la manière suivante.

L'orifice de refoulement de la pompe auxiliaire 25 est relié à un conduit de gavage 41. Ce conduit 41 est relié à un réservoir sans surpression 46, qui est à la pression atmosphérique, via un limiteur de pression 44. Le limiteur de pression 44 permet que la pression à l'orifice de refoulement de la pompe 25 soit maintenue à une pression P_{G} relativement basse (30 Bar), dite pression de gavage.

Le conduit 41 est relié en outre aux conduits de pompe 28A, 28B via des clapets anti-retour 42A, 42B. Cette liaison permet d'assurer que la pression dans les conduits de pompe reste en principe à tout moment au moins égale à la pression de gavage P_{G}.

D'autre part, les conduits de pompe 28A, 28B sont reliés à la conduite 41 via des limiteurs de pression 48A, 48B, afin d'éviter toute surpression.

Comme indiqué précédemment, le dispositif de transmission 20 comporte une électrovalve de commande 40, qui permet de le placer en mode activé ou en mode désactivé de la manière suivante.

Cette électrovalve 40 présente deux voies amont A, B, deux voies aval C et D, deux positions I, II, et un ressort de rappel qui tend à la maintenir dans sa position I.

La voie A est reliée au réservoir 52 (qui peut être le même que le réservoir 46). La voie B est reliée au conduit de gavage 41. Les voies C et D sont reliées aux chambres de commande 34A et 34B comme indiqué précédemment.

En position I, les voies A et C sont reliées, et les voies B et D sont reliées. En position II, les voies A et D sont reliées, et les voies B et C sont reliées.

Le dispositif de transmission hydraulique 20 est commandé par une unité de commande électronique 50.

Celle-ci est reliée aux différentes électrovalves et aux différents capteurs du dispositif 20 par des circuits seulement partiellement représentés.

L'unité de commande est reliée à un interrupteur 54, grâce auquel le conducteur du véhicule 10 active ou désactive le dispositif 20 par l'intermédiaire de l'unité de commande 50.

L'unité de commande 50 est également connectée à des capteurs de position reliés aux pédales de frein et d'accélération 55 du véhicule (Sur la figure 1, une seule pédale est représentée).

L'unité de commande 50 contrôle l'activation et la désactivation du dispositif 20 en agissant sur l'électrovalve 40 : Elle fait passer celle-ci en position II pour activer le dispositif et le faire passer en mode activé ; elle fait passer la valve 40 en position I pour désactiver le dispositif 20 et revenir en mode désactivé.

En mode désactivé, les conduits de pompe 28A et 28B sont reliés, via la valve d'activation 34 placée en position I. Les conduits de moteur sont reliés via la voie B de la valve 34 au réservoir 52 et sont ainsi maintenus à pression atmosphérique.

L'activation des moteurs 26A et 26B (et par extension, du dispositif 20) se fait donc de la manière suivante :
Le passage de la valve 40 de la position I à la position II déclenche l'engagement, ou activation des moteurs 26A, 26B, de la manière suivante : Suite au passage de la valve 40 en position II, la pression délivrée par la pompe auxiliaire 25, dite pression de gavage, s'applique dans la chambre hydraulique 34A au lieu de la chambre 34B. La valve hydraulique 34 passe donc de la position I (mode sans assistance) à la position II (mode moteur).

Presque instantanément, la pression de refoulement de la pompe principale se transmet dans le premier conduit de moteur 30, alors que la pression à l'orifice d'aspiration 24B de la pompe 24 s'applique dans le deuxième conduit de moteur 32.

Sous l'effet de cette pression, les pistons des moteurs 26A et 26B sortent de leurs cylindres dans lesquels ils étaient précédemment en position rétractée, et se placent au contact des cames des moteurs 26A et 26B. De manière connue en soi, ils délivrent alors un couple moteur sous l'effet de la pression du fluide régnant dans les conduits de moteur.

Inversement, pour la désactivation des moteurs 26A et 26B et donc du dispositif 20, on utilise la valve d'activation 34. Les moteurs 26A et 26B sont désactivés en faisant passer le dispositif 20 en mode sans assistance se fait grâce à la valve 34, en faisant passer celle-ci en position I pour bipasser les moteurs.

Le dispositif 20 offre cependant une seconde méthode pour rendre les moteurs 26A et 26B inactifs : Tout en maintenant le dispositif 20 activé (valve 34 en position II), on opère le dispositif 20 en mode «sans couple ».

Pour permettre ce mode de fonctionnement, l'unité de commande est apte à réguler la cylindrée de la pompe 24, et cela grâce à deux électrovalves 36A, 36B identiques.

Chacune de ces électrovalves présente deux voies amont reliées respectivement au conduit de gavage 41 et à un réservoir sans surpression 56, et une voie aval. Les voies aval des deux valves 36A, 36B sont reliées respectivement aux chambres de commande hydrauliques 22A, 22B de la pompe 24.

Ces chambres hydrauliques 22A et 22B permettent de contrôler la position du plateau oscillant de la pompe 24, de manière connue en soi, et permettent ainsi de contrôler la cylindrée de la pompe 24.

En fonction de la commande qui leur est appliquée, les valves 36A et 36B appliquent soit la pression de gavage, soit la pression atmosphérique, dans la chambre hydraulique 22A ou 22B à laquelle elles sont reliées.

Ainsi par l'intermédiaire des valves 36A et 36B, l'unité de commande 50 est à même de contrôler la cylindrée de la pompe 24.

De plus, l'unité de commande 50 est agencée de manière à pouvoir opérer le dispositif 20 dans un mode « sans couple ». Dans ce mode, les moteurs 26A et 26B ne délivrent aucun couple, car la cylindrée de la pompe est régulée par l'unité 50 de telle sorte que les pressions aux orifices d'alimentation 24A et d'échappement 24B de la pompe 24 soient sensiblement égales.

Pour permettre une telle régulation, le dispositif 20 comporte deux capteurs de pression 27 disposés respectivement sur la conduite de pompe 28A et sur la conduite de moteur 32. Lorsque la valve 34 est en position II, ces capteurs transmettent à l'unité de commande 50 les valeurs des pressions P_{A} et P_{B} régnant respectivement aux orifices d'alimentation et d'échappement des moteurs 26A et 26B.

Sur la base de ces valeurs de pression, l'unité de commande 50 fait varier et régule la valeur de la cylindrée de la pompe 24 de telle sorte que les pressions P_{A} et P_{B} deviennent égales. Cette régulation peut être faite par tout algorithme de contrôle adapté, en utilisant par exemple des PID ou autre.

Ainsi dans ce mode de régulation, le système utilise l'information de pression donnée par les capteurs de pression 27 pour déterminer la cylindrée de la pompe.

Par ailleurs, la plus basse de ces pressions (normalement P_{B} lorsque le véhicule se déplace en marche avant) est astreinte à être égale à la pression d'échange P_{E} par la valve d'échange 60.

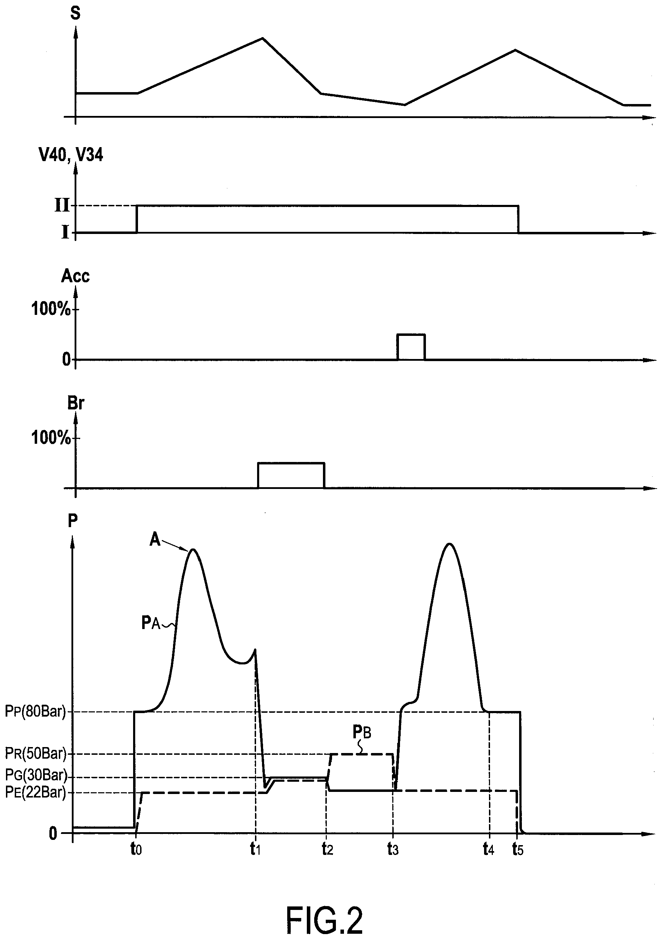

Le procédé de commande du dispositif 20 va maintenant être décrit en relation avec la figure 2.

Cette figure présente un exemple de comportement du véhicule 10 et notamment du dispositif 20, lorsqu'un ensemble de commandes lui sont successivement appliquées pendant un déplacement.

La figure comporte un axe des temps comme axe des abscisses. Différentes grandeurs sont portées en ordonnée, à savoir de haut en bas :
- La vitesse S du véhicule ;
- La position (respectivement V40 ou V34) des valves 40 et 34 ;
- La position Acc de la pédale d'accélérateur ;
- La position Br de la pédale de frein ;
- Les valeurs des pressions P_{A} et P_{B} régnant respectivement aux orifices d'alimentation et d'échappement des moteurs 26A et 26B.
(La pression mesurée par le capteur de pression 27 reliée à la conduite de pompe 28B n'est donc égale à la pression P_{B} indiquée par la courbe de la figure 2 que lorsque la valve 34 est en position II).

Pendant une période initiale précédant un instant t0, le véhicule 10 évolue à vitesse moyenne, sans assistance hydraulique, par exemple sur une portion horizontale d'une route. Le dispositif 20 est désactivé, et la valve 34 est en position I.

A l'instant t0, par exemple parce que le sol devient plus glissant et que le conducteur du véhicule 10 souhaite bénéficier de l'assistance hydraulique conférée par le dispositif 20, qui permet d'avoir quatre roues motrices, le conducteur active le dispositif 20.

Pour cela, il place l'interrupteur 54 de commande d'activation du dispositif 20 en position fermée. La fermeture de ce contact indique à l'unité de commande 50 que le dispositif 20 doit être activé. L'unité de commande active alors la valve 40 (instant t0), qui passe en position II. Il s'ensuit que la valve 34 passe également de la position I à la position II et reste alors en position II.

L'unité de commande place alors le dispositif 20 en mode d'assistance, qui est le mode par défaut.

Dans ce mode de fonctionnement, l'unité 50 impose à la pompe 24 d'avoir la cylindrée Cy, mais cela à condition que la pression d'alimentation P_{A} des moteurs 26A et 26B reste au moins égale à une pression-seuil minimale. Celle-ci est notée P_{P}, et est égale à 80 Bars dans le véhicule 10. Si la pression d'alimentation P_{A} tend à devenir inférieure à cette pression minimale P_{P}, l'unité 50 régule la cylindrée de la pompe de telle sorte que cette pression d'alimentation demeure égale à 80 Bars.

Par conséquent, dès l'activation du dispositif 20 à l'instant t0, la pression P_{A} croît brutalement pour s'établir à la valeur de 80 Bars. La pression P_{B} dans le même temps croît pour s'établir à la valeur de la pression d'échange P_{E}. (22 Bars).

Peu après l'instant t0, la pression PA tend à s'élever au-dessus de 80 Bars, probablement en raison d'un léger patinage des roues arrière 12A et 12B (flèche A). L'unité de commande modifie alors la position du plateau de la pompe 24 de telle sorte que la cylindrée de la pompe devienne égale à la cylindrée Cy.

La pression P_{A} fluctue alors, en fonction des variations de vitesse, et donc de débit, de la pompe 24.

A l'instant t1, le véhicule se trouve sur une pente et le conducteur du véhicule freine. Il appuie sur la pédale de frein 55. Cet appui est immédiatement détecté par l'unité de commande 50.

Celle-ci fait alors immédiatement passer le dispositif 20 en mode sans couple. Pour cela, tout en maintenant la valve 34 en position II, l'unité 50 commence à réguler la cylindrée de la pompe 24 de telle sorte que les pressions P_{A} et P_{B} aux orifices d'alimentation et d'échappement des moteurs 26A et 26B demeurent sensiblement égales.

La valve d'échange 60 passe donc en position médiane et se ferme.

Très rapidement, la pression P_{A} dans la conduite 28A décroît, afin de devenir égale à la pression P_{B}.

La pression dans les deux conduites de pompe et de moteur, alimentées par la pompe de gavage 25, s'établit alors à la valeur de la pression de gavage P_{G}, soit 30 Bars.

Simultanément, sous l'effet du freinage la vitesse du véhicule diminue. Pendant cette phase, comme le couple délivré par les moteurs 26A et 26B est nul, le dispositif 20 n'apporte aucune contribution d'aucune sorte au freinage.

Ensuite à un instant t2, alors que le véhicule est encore dans la pente, le conducteur du véhicule arrête de freiner. L'unité de commande perçoit l'arrêt de la pression sur la pédale de frein, et fait passer le dispositif 20 du mode sans couple au mode de retenue.

Pour cela, tout en maintenant la valve 34 en position activée II, l'unité de commande 50 régule la cylindrée de la pompe 24 de telle sorte que la pression P_{B} dans la conduite de retour 28B soit au moins égale (éventuellement égale) à la pression de retenue P_{R} (50 Bars).

Parallèlement, la valve d'échange 60 redevient active et impose que la pression dans la conduite de pompe 28A atteigne la pression de la pression d'échange P_{E} (22 Bars).

L'écart de pression (50Bar - 22Bar) entre les orifices d'échappement et d'alimentation des moteurs fait que ceux-ci délivrent un léger couple de freinage. Sous l'effet de ce couple, la vitesse du véhicule continue à décroître, mais plus lentement que pendant la phase de freinage.

A l'instant t3, le conducteur ne souhaite plus décélérer mais souhaite au contraire réaccélérer progressivement. Il appuie donc sur la pédale d'accélérateur.

Dès que cette commande a été détectée, l'unité de commande 50 refait repasser le véhicule en mode d'assistance. La vitesse du véhicule croît à nouveau.

Dans un premier temps, plus précisément entre l'instant t3 et un instant ultérieur t4, la pression aux orifices d'alimentation des moteurs est supérieure à la pression-seuil de 80 Bars. La cylindrée de la pompe est donc maintenue à la valeur Cy.

A partir de l'instant t4, la pression aux orifices d'alimentation des moteurs tend à devenir inférieure à la pression-seuil de 80 Bars. L'unité de commande régule alors la cylindrée de la pompe 24 de manière à maintenir la pression P_{A} à la valeur de 80 Bars.

A l'instant t5, le conducteur souhaite désactiver le dispositif 20. Il place l'interrupteur 54 de commande d'activation du dispositif 20 en position ouverte.

L'unité de commande 50 place la valve 40 en position I. La valve 34 par suite adopte également la position I. Le dispositif 20 est alors désactivé, et les moteurs 26A et 26B sont en position de bipasse.

L'unité de commande 50 pourrait également être configurée pour, lorsque la pédale de frein est relâchée au cours d'une phase avec assistance hydraulique, replacer le véhicule 10 en mode d'assistance plutôt que de le placer en mode de retenue.

Dans l'exemple précédent, l'invention a été illustrée par un mode de réalisation avec deux moteurs 26A et 26B placés en parallèle. L'invention peut naturellement être mise en oeuvre avec tout nombre de moteurs, et quelle que soit leur configuration (en série, en parallèle, une combinaison de ces deux dispositions), dès lors que l'obtention d'un couple nul en sortie des moteurs est assurée dès que les pressions en deux points du circuit - en général respectivement en amont et en aval des moteurs - sont égales. Ainsi dans ce cas, pour placer le dispositif en mode sans couple, l'unité de commande pilotera la cylindrée de la pompe de telle sorte que les pressions en ces deux points demeurent égales.

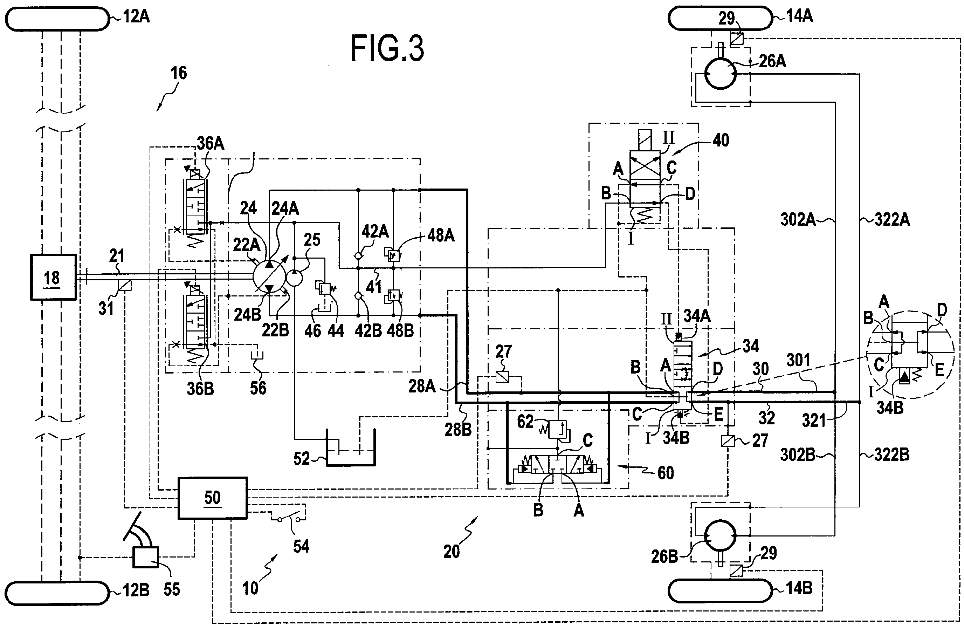

La figure 3 présente enfin un second mode de réalisation de l'invention. Ce mode de réalisation est identique au premier mode de réalisation décrit en relation avec la figure 2, à l'exception des points suivants.

Dans ce mode de réalisation, la régulation de la cylindrée de la pompe n'est pas faite à partir des mesures de pression des capteurs de pression 29, mais à partir de mesures de vitesses de rotation de roues.

Les roues 14A et 14B sont utilisées comme organes de déplacement de référence du véhicule.

Pour l'acquisition des informations permettant de déterminer la vitesse de rotation des roues 14A et 14B (organes de déplacement de référence), le dispositif comporte des capteurs de vitesse 29 qui mesurent directement la vitesse de rotation de ces roues (celles-ci sont par ailleurs solidaires en rotation des arbres de sortie des moteurs 26A et 26B) et la transmettent à l'unité de commande 50.

Dans le mode de réalisation illustré par la figure 7 les capteurs 29 sont placés sur les roues 14A et 14B, mais ils peuvent également - et même de préférence - être disposés sur les roues 12A et 12B.

Le dispositif comporte en outre un capteur de vitesse 31 qui mesure la vitesse de rotation de l'arbre 21, qui est également la vitesse de rotation du rotor de la pompe 24. Les informations mesurées par le capteur 31 sont transmises à l'unité de commande 50.

Dans ce mode de régulation, la cylindrée de la pompe 24 est régulée sans avoir recours à des capteurs de pression.

En effet, l'unité de commande 50 détermine la cylindrée de la pompe sur la base des informations de vitesse de rotation des roues fournies par les capteurs 29, et des informations de vitesse de rotation du rotor de la pompe 24 fournies par le capteur 31. La cylindrée de la pompe est calculée de telle sorte que la vitesse de rotation des arbres de sortie des moteurs hydrauliques 26A, 26B, calculée à partir de la vitesse de rotation du rotor de la pompe 24 et des cylindrées respectives de la pompe et des moteurs, soit égale à la vitesse de rotation effective des arbres de sortie des moteurs 26A, 26B (c'est-à-dire la vitesse de rotation des roues 14A, 14B) telle que mesurée par les capteurs 29.

La vitesse de rotation de l'arbre de la pompe 24 conjointement avec la cylindrée de celle-ci détermine en effet le débit de fluide refoulé par la pompe 24 vers les moteurs 26A,26B. De ce débit se déduit la vitesse de rotation des arbres de sortie des moteurs, compte tenu de la cylindrée de ceux-ci.

En choisissant une cylindrée de pompe qui rend la vitesse de rotation des arbres de sortie des moteurs 26A,26B égale à la vitesse de rotation des roues 14A, 14B, l'unité de commande 50 pilote la pompe 24 de telle sorte que les pressions de fluide aux orifices d'alimentation et d'échappement des moteurs 26A, 26B demeurent sensiblement égales, et que les moteurs 26A et 26B ne délivrent aucun couple sur leur arbre de sortie.

Le dispositif 20 comporte cependant également les mêmes capteurs de pression 27 que le dispositif du premier mode de réalisation de l'invention.

Sur la base des informations de pression fournies par les capteurs 27, en mode sans couple, l'unité de commande 50 vérifie que l'écart de pression entre les orifices d'alimentation et d'échappement des moteurs hydrauliques est inférieur à un écart de pression prédéterminé. Si ce n'est pas le cas, elle transmet au conducteur du véhicule un signal d'alerte.

## Revendications

1. Dispositif de transmission hydraulique (20) comprenant :
- une pompe (24) à cylindrée variable ;
- au moins un moteur hydraulique (26A,26B), alimenté par la pompe,
- une unité de commande (50) ;
le dispositif **se caractérisant en ce que** :
- ledit au moins un moteur est agencé de telle sorte que lorsque les pressions dans des orifices d'alimentation et d'échappement dudit au moins un moteur sont égales, le couple de sortie dudit au moins un moteur est nul ; et
- dans un mode de fonctionnement du dispositif, l'unité de commande est apte à opérer le dispositif dans un mode « sans couple » en régulant la cylindrée de la pompe de telle sorte que les pressions auxdits orifices d'alimentation et d'échappement demeurent sensiblement égales.

2. Dispositif (20) de transmission hydraulique selon la revendication 1, dont l'unité de commande est apte à opérer le dispositif dans un mode de retenue, dans lequel la cylindrée de la pompe est régulée de telle sorte que la pression à l'orifice d'échappement dudit au moins un moteur est supérieure d'au moins une valeur prédéterminée à la pression à l'orifice d'alimentation dudit au moins un moteur.

3. Dispositif (20) de transmission hydraulique selon la revendication 1 ou 2, comprenant en outre une valve d'activation (34), apte dans une première position à mettre en communication la pompe (24) avec ledit au moins un moteur pour alimenter celui-ci, et dans une deuxième position au contraire à isoler la pompe dudit au moins un moteur, et dont l'unité de commande est prévue pour, immédiatement après un passage de la valve d'activation de la deuxième à la première position, et/ou immédiatement avant un passage de la valve d'activation de la première à la deuxième position, soit opérer le dispositif en mode sans couple, ou soit réguler la cylindrée de la pompe de telle sorte que la pression d'alimentation dudit au moins un moteur soit au moins égale à une valeur prédéterminée.

4. Dispositif (20) de transmission hydraulique selon l'une quelconque des revendications 1 à 3, comprenant en outre des capteurs de pression (27), aptes à transmettre à l'unité de commande des valeurs de pression aux orifices d'alimentation et d'échappement dudit au moins un moteur, et dont l'unité de commande est agencée de manière à, en mode sans couple, réguler la cylindrée de la pompe sur la base des informations de pression donnée par lesdits capteurs de pression (27).

5. Véhicule comprenant un dispositif (20) de transmission hydraulique selon l'une quelconque des revendications 1 à 3 ;
ledit dispositif comprenant en outre des moyens d'acquisition aptes à transmettre à l'unité de commande des informations permettant de déterminer une valeur de vitesse de rotation d'un organe de déplacement du véhicule utilisé comme référence, et un capteur de vitesse de pompe (31), apte à transmettre à l'unité de commande des informations permettant de déterminer la vitesse de rotation d'un rotor de ladite pompe (24) ;
l'unité de commande étant en outre agencée de manière, en mode sans couple, à déterminer la valeur de vitesse de rotation de l'organe de déplacement de référence et la vitesse de rotation du rotor de la pompe, et à réguler le débit de la pompe en fonction de la vitesse de rotation du rotor de la pompe de telle sorte que l'organe de sortie dudit au moins un moteur tourne à une vitesse égale à celle déterminée pour l'organe de déplacement de référence.

6. Véhicule selon la revendication 5, dont le dispositif de transmission hydraulique comprend en outre des capteurs de pression (27), aptes à transmettre à l'unité de commande des valeurs de pression aux orifices d'alimentation et d'échappement dudit au moins un moteur, et dont l'unité de commande est agencée de manière à, en mode sans couple, vérifier que l'écart entre les pressions aux orifices d'alimentation et d'échappement dudit au moins un moteur est inférieur à une valeur prédéterminée, sur la base des informations de pression donnée par lesdits capteurs de pression (27).

7. Véhicule comportant un dispositif de freinage, un dispositif de transmission hydraulique selon l'une des revendications 1 à 4, et au moins un organe de déplacement (14A,14B) entraîné par ledit au moins un moteur ; le véhicule présentant un mode de fonctionnement dans lequel, lorsque le dispositif de freinage est actionné, l'unité de commande (50) opère le dispositif de transmission hydraulique en mode sans couple.

8. Véhicule selon l'une quelconque des revendications 5 à 7, dont l'unité de commande est agencée pour à l'issue d'un freinage opérer automatiquement le dispositif dans un mode de retenue, mode dans lequel la cylindrée de la pompe est régulée de telle sorte que la pression à l'orifice d'échappement dudit au moins un moteur est supérieure d'au moins une valeur prédéterminée à la pression à l'orifice d'alimentation dudit au moins un moteur.

9. Véhicule selon la revendication 8, comprenant des organes de déplacement avant et des organes de déplacement arrière, et dont l'unité de commande est agencée pour, si une commande d'accélération est transmise au véhicule alors que celui-ci est en mode de retenue, faire passer automatiquement le dispositif de transmission hydraulique en un mode d'assistance, dans lequel la cylindrée de la pompe est généralement maintenue à une valeur fixe (Cy) déterminée de telle sorte que la vitesse de rotation des organes de déplacement avant ne soit pas inférieure à la vitesse de rotation des organes de déplacement arrière.

10. Véhicule selon l'une quelconque des revendications 5 à 9, dont l'unité de commande est apte à opérer le dispositif dans un mode de freinage, dans lequel la cylindrée de la pompe est régulée de telle sorte que la pression à l'orifice d'échappement dudit au moins un moteur est supérieure à la pression à l'orifice d'alimentation dudit au moins un moteur d'une valeur fonction d'une commande de freinage transmise au véhicule.

11. Véhicule selon l'une quelconque des revendications 5 à 10, comprenant en outre un moteur à combustion interne (18), et une transmission principale mécanique (16) ; et dans lequel la pompe est entraînée par un arbre de sortie (21) lié audit moteur à combustion interne ou à une boîte de vitesse couplée à celui-ci.

12. Procédé de commande d'un dispositif (20) de transmission hydraulique, ledit dispositif comprenant une pompe (24) à débit variable, au moins un moteur hydraulique (26A,26B), alimenté par la pompe, et une unité de commande (50);
le procédé **se caractérisant en ce que** dans le dispositif de transmission hydraulique, ledit au moins un moteur est agencé de telle sorte que lorsque les pressions dans des orifices d'alimentation et d'échappement dudit au moins un moteur sont égales, le couple de sortie dudit au moins un moteur est nul ; et **en ce que** pendant une période on opère le dispositif dans un mode « sans couple », dans lequel on régule la cylindrée de la pompe de telle sorte que les pressions auxdits orifices d'alimentation et d'échappement demeurent sensiblement égales.

13. Procédé de commande d'un dispositif de transmission hydraulique selon la revendication 12, dans lequel en outre, pendant une période de retenue, on opère le dispositif dans un mode de retenue, dans lequel on régule la cylindrée de la pompe (24) de telle sorte que la pression à l'orifice d'échappement dudit au moins un moteur soit supérieure d'au moins une valeur prédéterminée à la pression à l'orifice d'alimentation dudit au moins un moteur.

14. Procédé de commande d'un dispositif de transmission hydraulique selon la revendication 12 ou 13, monté sur un véhicule ayant deux essieux à roues entrainées, un essieu avant parmi lesdits essieux étant situé en avant de l'autre essieu, dit essieu arrière, par rapport au sens de déplacement du véhicule ; les roues d'un seul desdits essieux étant entraînées par le dispositif de transmission hydraulique ; procédé dans lequel en outre, pendant une période d'assistance, on opère le dispositif dans un mode de fonctionnement dans lequel la cylindrée de la pompe est généralement maintenue à une valeur fixe (Cy) déterminée de telle sorte que la vitesse de rotation des roues de l'essieu avant n'est pas inférieure à la vitesse de rotation des roues de l'essieu arrière.

15. Procédé de commande d'un dispositif de transmission hydraulique selon l'une quelconque des revendications 12 à 14, mis en oeuvre à bord d'un véhicule à entraînement hydraulique comportant un dispositif de freinage, ledit dispositif de transmission hydraulique, et au moins un organe de déplacement entraîné par ledit au moins un moteur ; procédé dans lequel lorsque le dispositif de freinage du véhicule est actionné, on opère le dispositif de transmission hydraulique en mode sans couple.

16. Procédé de commande selon la revendication 15, dans lequel, quand on arrête d'actionner le dispositif de freinage du véhicule, on opère le dispositif de transmission hydraulique en mode de retenue, mode dans lequel on régule la cylindrée de la pompe de telle sorte que la pression à l'orifice d'échappement dudit au moins un moteur soit supérieure d'au moins une valeur prédéterminée à la pression à l'orifice d'alimentation dudit au moins un moteur.

## Patentansprüche

1. Hydraulische Übertragungsvorrichtung (20), umfassend:
- eine Verstellpumpe (24),
- mindestens einen Hydraulikmotor (26A, 26B), der von der Pumpe versorgt wird,
- eine Steuereinheit (50),
wobei die Vorrichtung **dadurch gekennzeichnet ist, dass**:
- der mindestens eine Motor so ausgeführt ist, dass, wenn die Drücke in den Ein- und Auslassöffnungen des mindestens einen Motors gleich sind, das Ausgangsdrehmoment des mindestens einen Motors Null beträgt, und
- die Steuereinheit in einer Betriebsart der Vorrichtung in der Lage ist, die Vorrichtung in einem "drehmomentfreien" Modus zu betreiben, indem sie die Fördermenge der Pumpe so reguliert, dass die Drücke an den Ein- und Auslassöffnungen im Wesentlichen gleich bleiben.

2. Hydraulische Übertragungsvorrichtung (20) gemäß Anspruch 1, deren Steuereinheit in der Lage ist, die Vorrichtung in einem Haltemodus zu betreiben, wobei die Fördermenge der Pumpe so reguliert wird, dass der Druck an der Auslassöffnung des mindestens einen Motors um mindestens einen vorbestimmten Wert höher ist als der Druck an der Einlassöffnung des mindestens einen Motors.

3. Hydraulische Übertragungsvorrichtung (20) gemäß Anspruch 1 oder 2, die ferner ein Aktivierungsventil (34) umfasst, das dazu geeignet ist, in einer ersten Position die Pumpe (24) mit dem mindestens einen Motor zu verbinden, um diesen zu versorgen, und in einer zweiten Position dagegen die Pumpe von dem mindestens einen Motor zu trennen, und deren Steuereinheit vorgesehen ist, um, unmittelbar nach einem Wechsel des Aktivierungsventils von der zweiten in die erste Position und/oder unmittelbar vor einem Wechsel des Aktivierungsventils von der ersten in die zweite Position, entweder die Vorrichtung drehmomentfrei zu betreiben oder die Fördermenge der Pumpe so zu regulieren, dass der Versorgungsdruck des mindestens einen Motors mindestens gleich einem vorbestimmten Wert ist.

4. Hydraulische Übertragungsvorrichtung (20) gemäß einem der Ansprüche 1 bis 3, ferner umfassend Drucksensoren (27), die in der Lage sind, Werte des an den Ein- und Auslassöffnungen des mindestens einen Motors herrschenden Drucks an die Steuereinheit zu übertragen, und deren Steuereinheit so ausgebildet ist, dass sie im drehmomentfreien Modus die Fördermenge der Pumpe auf der Grundlage der von den Drucksensoren (27) übermittelten Druckinformationen reguliert.

5. Fahrzeug mit einer hydraulischen Übertragungsvorrichtung (20) gemäß einem der Ansprüche 1 bis 3,
wobei die Vorrichtung ferner Erfassungsmittel, die in der Lage sind, Informationen an die Steuereinheit zu übertragen, die es ermöglichen, einen Drehzahlwert eines Bewegungselements des Fahrzeugs zu bestimmen, das als Referenz verwendet wird, und einen Pumpendrehzahlsensor (31), der in der Lage ist, Informationen an die Steuereinheit zu übertragen, die es ermöglichen, die Drehzahl eines Rotors der Pumpe (24) zu bestimmen, umfasst,
wobei die Steuereinheit ferner dazu ausgelegt ist, im drehmomentfreien Modus den Drehzahlwert des Referenzbewegungselements und die Drehzahl des Pumpenrotors zu bestimmen und den Pumpendurchsatz in Abhängigkeit von der Drehzahl des Pumpenrotors so zu regulieren, dass sich das Abtriebselement des mindestens einen Motors mit einer Drehzahl dreht, die derjenigen entspricht, die für das Referenzbewegungselement bestimmt wurde.

6. Fahrzeug gemäß Anspruch 5, dessen hydraulische Übertragungsvorrichtung ferner Drucksensoren (27) umfasst, die in der Lage sind, Werte des an den Ein- und Auslassöffnungen des mindestens einen Motors herrschenden Drucks an die Steuereinheit zu übertragen, wobei ihre Steuereinheit so ausgebildet ist, dass sie im drehmomentfreien Modus auf der Grundlage der von den Drucksensoren (27) übermittelten Druckinformationen überprüft, ob die Differenz zwischen den Drücken an den Ein- und Auslassöffnungen des mindestens einen Motors kleiner als ein vorgegebener Wert ist.

7. Fahrzeug mit einer Bremsvorrichtung, einer hydraulischen Übertragungsvorrichtung gemäß einem der Ansprüche 1 bis 4 und mindestens einem Bewegungselement (14A, 14B), das von dem mindestens einen Motor angetrieben wird, wobei das Fahrzeug eine Betriebsart aufweist, in der die Steuereinheit (50) bei Aktivierung der Bremsvorrichtung die hydraulische Übertragungsvorrichtung im drehmomentfreien Modus betätigt.

8. Fahrzeug gemäß einem der Ansprüche 5 bis 7, dessen Steuereinheit dazu ausgelegt ist, die Vorrichtung nach einer Abbremsung automatisch in einem Haltemodus zu betreiben, wobei die Fördermenge der Pumpe so reguliert wird, dass der Druck an der Auslassöffnung des mindestens einen Motors um mindestens einen vorbestimmten Wert höher ist als der Druck an der Einlassöffnung des mindestens einen Motors.

9. Fahrzeug gemäß Anspruch 8, umfassend Vorwärts- und Rückwärtsbewegungselemente, wobei die Steuereinheit dazu ausgelegt ist, wenn eine Beschleunigungssteuerung auf das Fahrzeug übertragen wird, während es sich im Haltemodus befindet, die hydraulische Übertragungsvorrichtung automatisch in einen Unterstützungsmodus zu schalten, in dem die Fördermenge der Pumpe im Allgemeinen auf einem festen Wert (Cy) gehalten wird, der so bestimmt ist, dass die Drehzahl der Vorwärtsbewegungselemente nicht geringer ist als die Drehzahl der Rückwärtsbewegungselemente.

10. Fahrzeug gemäß einem der Ansprüche 5 bis 9, dessen Steuereinheit in der Lage ist, die Vorrichtung in einem Bremsmodus zu betreiben, in dem die Fördermenge der Pumpe so reguliert wird, dass der Druck an der Auslassöffnung des mindestens einen Motors um einen Wert höher ist als der Druck an der Einlassöffnung des mindestens einen Motors, der von einer auf das Fahrzeug übertragenen Bremssteuerung abhängig ist.

11. Fahrzeug gemäß einem der Ansprüche 5 bis 10, ferner umfassend einen Verbrennungsmotor (18) und ein mechanisches Hauptgetriebe (16), und wobei die Pumpe von einer Ausgangswelle (21) angetrieben wird, die mit dem Verbrennungsmotor oder einem mit diesem gekoppelten Getriebe verbunden ist.

12. Verfahren zum Steuern einer hydraulischen Übertragungsvorrichtung (20), wobei die Vorrichtung eine Pumpe (24) mit verstellbarem Durchsatz, mindestens einen von der Pumpe versorgten Hydraulikmotor (26A, 26B) und eine Steuereinheit (50) umfasst, wobei das Verfahren **dadurch gekennzeichnet ist, dass** in der hydraulischen Übertragungsvorrichtung der mindestens eine Motor so ausgebildet ist, dass, wenn die Drücke in den Ein- und Auslassöffnungen des mindestens einen Motors gleich sind, das Ausgangsdrehmoment des mindestens einen Motors Null beträgt, und dass die Vorrichtung während einer Periode in einem "drehmomentfreien" Modus betrieben wird, in dem die Fördermenge der Pumpe so reguliert wird, dass die Drücke an den Ein- und Auslassöffnungen im Wesentlichen gleich bleiben.

13. Verfahren zum Steuern einer hydraulischen Übertragungsvorrichtung gemäß Anspruch 12, wobei ferner während einer Halteperiode die Vorrichtung in einem Haltemodus betrieben wird, in dem die Fördermenge der Pumpe (24) so reguliert wird, dass der Druck an der Auslassöffnung des mindestens einen Motors um mindestens einen vorbestimmten Wert höher ist als der Druck an der Einlassöffnung des mindestens einen Motors.

14. Verfahren zum Steuern einer hydraulischen Übertragungsvorrichtung gemäß Anspruch 12 oder 13, die an einem Fahrzeug montiert ist, das zwei Achsen mit angetriebenen Rädern aufweist, wobei eine Vorderachse dieser Achsen in Bezug auf die Bewegungsrichtung des Fahrzeugs vor der anderen Achse, Hinterachse genannt, liegt, wobei die Räder nur einer der Achsen von der hydraulischen Übertragungsvorrichtung angetrieben werden, wobei in dem Verfahren ferner während einer Unterstützungsperiode die Vorrichtung in einem Betriebsmodus betrieben wird, in dem die Fördermenge der Pumpe im Allgemeinen auf einem festen Wert (Cy) gehalten wird, der so bestimmt ist, dass die Drehzahl der Vorderachsräder nicht geringer ist als die Drehzahl der Hinterachsräder.

15. Verfahren zur Steuerung einer hydraulischen Übertragungsvorrichtung gemäß einem der Ansprüche 12 bis 14, das in einem hydraulisch angetriebenen Fahrzeug verwendet wird, umfassend eine Bremsvorrichtung, die hydraulische Übertragungsvorrichtung und mindestens ein Bewegungselement, das von dem mindestens einen Motor angetrieben wird, wobei in dem Verfahren die hydraulische Übertragungsvorrichtung bei Aktivierung der Fahrzeugbremsanlage drehmomentfrei betrieben wird.

16. Verfahren zum Steuern gemäß Anspruch 15, bei dem, wenn die Fahrzeugbremsvorrichtung deaktiviert wird, die hydraulische Übertragungsvorrichtung im Haltemodus betrieben wird, in dem die Fördermenge der Pumpe so reguliert wird, dass der Druck an der Auslassöffnung des mindestens einen Motors um mindestens einen vorbestimmten Wert höher ist als der Druck an der Einlassöffnung des mindestens einen Motors.

## Claims

1. Hydraulic transmission apparatus (20) comprising:
• a pump (24) having a variable cylinder capacity;
• at least one hydraulic motor (26A, 26B), fed by the pump; and
• a control unit (50);
the apparatus being **characterized in that**:
• said at least one motor is arranged in such a manner that when the pressures in the feed and discharge orifices of said at least one motor are equal, the outlet torque from said at least one motor is zero; and
• in an operating mode of the apparatus, the control unit is suitable for operating the apparatus in a "torque-free" mode by regulating the cylinder capacity of the pump in such a manner that the pressures at said feed and discharge orifices remain substantially equal.

2. Hydraulic transmission apparatus (20) according to claim 1, wherein the control unit is suitable for operating the apparatus in a restraint mode, in which the cylinder capacity of the pump is regulated in such a manner that the pressure at the discharge orifice of said at least one motor is greater by at least a predetermined value than the pressure at the feed orifice of said at least one motor.

3. Hydraulic transmission apparatus (20) according to claim 1 or claim 2, further comprising an activation valve (34) suitable, in a first position, for putting the pump (24) into communication with said at least one motor so as to feed it, and, in a second position, conversely, for isolating the pump from said at least one motor, and wherein the control unit is designed such that, immediately after the activation valve goes over from the second position to the first position, and/or immediately before the activation valve goes over from the first position to the second position, said control unit either operates the apparatus in torque-free mode, or regulates the cylinder capacity of the pump in such a manner that the feed pressure of said at least one motor is not less than a predetermined value.

4. Hydraulic transmission apparatus (20) according to any one of claims 1 to 3, further comprising pressure sensors (27) suitable for transmitting to the control unit the values of the pressures at the feed and discharge orifices of said at least one motor, and wherein the control unit is arranged in such a manner that, in torque-free mode, the control unit regulates the cylinder capacity of the pump on the basis of the pressure information given by said pressure sensors (27).

5. A vehicle including hydraulic transmission apparatus (20) according to any one of claims 1 to 3;
said apparatus further comprising acquisition means suitable for transmitting to the control unit information making it possible to determine the value of the speed of rotation of a vehicle mover member used as a reference, and a pump speed sensor (31) suitable for transmitting to the control unit information making it possible to determine the speed of rotation of a rotor of said pump (24); and
the control unit further being arranged in such a manner that, in torque-free mode, it determines the value of the speed of rotation of the reference mover member and the speed of rotation of the rotor of the pump, and it regulates the delivery rate of the pump as a function of the speed of rotation of the rotor of the pump in such a manner that the outlet member of said at least one motor turns at a speed equal to the speed determined for the reference mover member.

6. A vehicle according to claim 5, wherein the hydraulic transmission apparatus further comprises pressure sensors (27) suitable for transmitting to the control unit the values of the pressures at the feed and discharge orifices of said at least one motor, and wherein the control unit is arranged in such a manner that, in torque-free mode, the control unit checks that the difference between the pressures at the feed and discharge orifices of said at least one motor is less than a predetermined value, on the basis of the pressure information given by said pressure sensors (27).

7. A vehicle including braking apparatus, hydraulic transmission apparatus according to any one of claims 1 to 4, and at least one vehicle mover member (14A, 14B) driven by said at least one motor; the vehicle having an operating mode in which, when the braking apparatus is actuated, the control unit (50) operates the hydraulic transmission apparatus in torque-free mode.

8. A vehicle according to any one of claims 5 to 7, wherein the control unit is arranged so that, after braking, it automatically operates the apparatus in a restraint mode, in which mode the cylinder capacity of the pump is regulated in such a manner that the pressure at the discharge orifice of said at least one motor is greater by at least a predetermined value than the pressure at the feed orifice of said at least one motor.

9. A vehicle according to claim 8, including front mover members and rear mover members, and wherein the control unit is arranged so that, if an acceleration command is transmitted to the vehicle while said vehicle is in restraint mode, said control unit automatically causes the hydraulic transmission apparatus to go over to assistance mode, in which the cylinder capacity of the pump is generally maintained at a fixed value (Cy) determined in such a manner that the speed of rotation of the front mover members is not less than the speed of rotation of the rear mover members.

10. A vehicle according to any one of claims 5 to 9, wherein the control unit is suitable for operating the apparatus in a braking mode, in which the cylinder capacity of the pump is regulated in such a manner that the pressure at the discharge orifice of said at least one motor is greater than the pressure at the feed orifice of said at least one motor by a value that is a function of a braking command transmitted to the vehicle.

11. A vehicle according to any one of claims 5 to 10, further including an internal combustion engine (18) and a mechanical main transmission (16); and wherein the pump is driven by an outlet shaft (21) associated with said engine or with a gearbox coupled to said engine.

12. A method of controlling hydraulic transmission apparatus (20), said apparatus comprising a pump (24) having a variable delivery rate, at least one hydraulic motor (26A, 26B), fed by the pump, and a control unit (50) ;
the method being **characterized in that**, in the hydraulic transmission apparatus, said at least one motor is arranged in such a manner that when the pressures in the feed and discharge orifices of said at least one motor are equal, the outlet torque from said at least one motor is zero; and **in that**, during a period, the apparatus is operated in a "torque-free" mode, in which the cylinder capacity of the pump is regulated in such a manner that the pressures at said feed and discharge orifices remain substantially equal.

13. A method of controlling hydraulic transmission apparatus according to claim 12, wherein, in addition, during a restraining period, the apparatus is operated in a restraint mode, in which the cylinder capacity of the pump (24) is regulated in such a manner that the pressure at the discharge orifice of said at least one motor is greater by at least a predetermined value than the pressure at the feed orifice of said at least one motor.

14. A method of controlling hydraulic transmission apparatus according to claim 12 or claim 13, mounted in a vehicle having two axles with driven wheels, a front one of the axles being situated in front of the "rear" other axle, relative to the direction of movement of the vehicle; the wheels of a single one of said axles being driven by the hydraulic transmission apparatus; in which method, in addition, during an assistance period, the apparatus is operated in an operating mode in which the cylinder capacity of the pump is generally maintained at a fixed value (Cy) determined in such a manner that the speed of rotation of the wheels of the front axle is not less than the speed of rotation of the wheels of the rear axle.

15. A method of controlling hydraulic transmission apparatus according to any one of claims 12 to 14, implemented on board a hydraulically driven vehicle including braking apparatus, said hydraulic transmission apparatus, and at least one vehicle mover member driven by said at least one motor; in which method, when the braking apparatus of the vehicle is actuated, the hydraulic transmission apparatus is operated in torque-free mode.

16. A method of controlling hydraulic transmission apparatus according to claim 15, wherein, when the braking apparatus of the vehicle ceases to be actuated, the apparatus is operated in a restraint mode, in which mode the cylinder capacity of the pump is regulated in such a manner that the pressure at the discharge orifice of said at least one motor is greater by at least a predetermined value than the pressure at the feed orifice of said at least one motor.
